# EUROPEAN PATENT APPLICATION

(11) **EP 4 287 370 A1**
(43) Date of publication of application: **06.12.2023**
(21) Application number: 22305798.5
(22) Date of filing: 31.05.2022
(51) Int. Cl.: H01M 50/204, H01M 50/209, H01M 50/298, H01M 50/308, H01M 50/358, H01M 50/367

(54) **BATTERY AND VENTING ARRANGEMENT**

(71) Applicant: EnerSys Delaware Inc., Reading, PA 19605 (US)
(72) Inventor: KHAMMASSI, Montassar, 62033 Arras Cedex (FR)
(74) Representative: Abel & Imray LLP

(57) **Abstract**

The present invention concerns a battery. More particularly, but not exclusively, this invention concerns a battery module comprising a battery module housing. A plurality of battery cells within the battery module housing comprise a cell vent configured to expel excess gas emitted from the battery cell. A venting channel comprises a plurality of venting apertures located aligned with the cell vents, and is arranged to direct gas emitted from the cell vents towards a vent in the battery module housing. The venting channel also secures the cell stack in position within the battery housing and comprises a plurality of wiring apertures. Battery module wiring passes through the wiring apertures and runs along the venting channel.

## Description

### Field of the Invention

The present invention concerns a battery. More particularly, but not exclusively, this invention concerns a venting arrangement for a battery.

### Background of the Invention

Lithium ion batteries, along with many other batteries, may expel gas during use. Power modules are made of a plurality of battery cells arranged in a cell stack, usually enclosed with a power module housing. In order to avoid gas build up within the plurality of battery cells, each cell comprises a vent to expel excess gas, and the power module housing also contains a vent to allow excess gas to be expelled from the power module housing. Typical power modules contain a considerable number of parts, often plastic parts, which are used to mechanically fix the cell stack to the module housing, align the plurality of battery cells correctly, hold cell to cell insulation pads, wiring routing management, and holding or fixing electronic components in position. The use of a large number of parts adds complexity to the manufacturing process, and the production of those parts may result in defects or impermissible tolerances stacking up during the manufacturing process. The use of plastic parts in a power module may also provide combustible material in the event of a thermal runaway event or other battery temperature increase.

The present invention seeks to mitigate the above-mentioned problems. Alternatively or additionally, the present invention seeks to provide an improved battery arrangement.

### Summary of the Invention

The present invention provides according to a first aspect, a battery module comprising:
a battery module housing;
a plurality of battery cells within the battery module housing forming a cell stack, each of the plurality of battery cells comprising a cell vent configured to expel excess gas emitted from the battery cell; and
a venting channel, the venting channel comprising a plurality of venting apertures located aligned with the plurality of cell vents, the venting channel arranged to direct gas emitted from the cell vents towards a vent in the battery module housing;
the venting channel further arranged to secure the cell stack in position within the battery housing;
the venting channel further comprising a plurality of wiring apertures, and battery module wiring passing through the wiring apertures and running along the venting channel.

Excess gas emitted from the battery cells may be at a relatively high temperature, for example between 300 degrees Celsius and 600 degrees Celsius. The venting channel may direct the high temperature gas away from components in the battery module which may be damaged by the hot temperature.

The venting channel may comprise one or more tabs arranged to secure the venting channel to the battery module housing, such that the cell stack is held in position within the battery housing. The one or more tabs may be mechanically attached to the battery module housing, for example via a clip or nut and bolt arrangement. The venting channel may be removable from the battery module housing to allow the cell stack or one or more of the plurality of battery cells to be replaced or repaired during the lifetime of the battery module. The venting channel may be permanently fixed to the battery module housing, for example by spot welding.

The venting channel may be approximately cuboidal or cylindrical in shape. The venting channel may have a rectangular or circular cross section. The venting channel may comprise a removable top section, the removable top section spaced opposite the venting apertures. The removable top section may be removed during installation of the venting channel, for example whilst installing wiring that runs along the venting channel. The removable top section may then be fixed to the venting channel, for example by screwing or clipping the removable top section in position. The removable top section may be a solid section, such that there are no apertures through the removable top section. Such an arrangement may include screw holes which are filled when the removable top section is attached to the remainder of the venting channel. A top section with no, or very few, apertures may improve the efficiency with which gas is channelled from the cell vents to the vent in the battery housing module.

The venting channel may be at least partially made of a metal material, for example steel. The metal material may be stamped or cut from a sheet of metal. The metal material may be folded into the desired shape for the venting channel, for example as described above. Folding a sheet of metal material to construct the venting channel may provide a simple means by which to manufacture the venting channel.

As the venting channel may be located close to a number of battery cell terminals, the venting channel may comprise an insulating material. For example, the venting channel may comprise a metal material coated in an insulating material. Such an example would include a metal material that is folded as described above, and then dipped or sprayed in a plastic material, for example silicone.

The venting channel may comprise one or more clips or guides arranged to secure and/or guide wiring which runs along the venting channel. The clips or guide may be integrally formed with the venting channel, for example by folding stamped sections of the venting channel, or may comprise additional components secured to the venting channel. For example, plastic clips may be inserted in corresponding apertures in the venting channel.

The power module housing may comprise one or more insulated sides and/or an insulated base. The power module housing may comprise an insulated top portion. The venting channel acts to channel excess gas, potentially at a high temperature, away from sensitive components in the power module. The better sealed the venting channel is, the better the venting effect may be. As such, the vent apertures and wiring apertures may be provided with respective gaskets to improve sealing. Where the venting channel comprises a removable top portion, a gasket may be provided to improve sealing between the removable top portion and remainder of the venting channel. The gasket or gaskets may be insulators and temperature resistant, so they are not significantly degraded or affected by high temperature gases.

The plurality of battery cells may be metal ion battery cells, for example lithium ion battery cells, sodium ion battery cells, potassium ion battery cells, magnesium ion battery cells, or aluminium ion battery cells. The invention is applicable to any battery cells which may emit gas where control over the emission flow path is desirable.

According to a second aspect of the invention there is also provided a venting channel for a battery module, the battery module comprising a plurality of battery cells forming a cell stack, the venting channel comprising:
a plurality of venting apertures configured for alignment with a plurality of cell vents, the venting channel arranged to direct gas emitted from the cell vents towards a vent in the battery module housing;
the venting channel further configured to secure the cell stack in position within the battery housing;
the venting channel further comprising a plurality of wiring apertures, configured to allow battery module wiring to pass through the wiring apertures and run along the venting channel.

According to a third aspect of the invention, there is provided a method of manufacturing a battery module according to the first aspect of the invention, the method comprising the steps of:
aligning the venting channel such that the venting apertures are aligned with the cells vents;
securing the venting channel to the power module housing such that the cell stack is secured within the power module housing;
passing wiring through the wiring apertures such that the wiring runs along the venting channel.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
Figure 1 shows a schematic view of a power module according to an embodiment of the invention;
Figures 2 and 3 show a schematic view of a venting channel according to an embodiment of the invention and
Figures 4 and 5 show a schematic view of ends of a venting channel according to an embodiment of the invention.

### Detailed Description

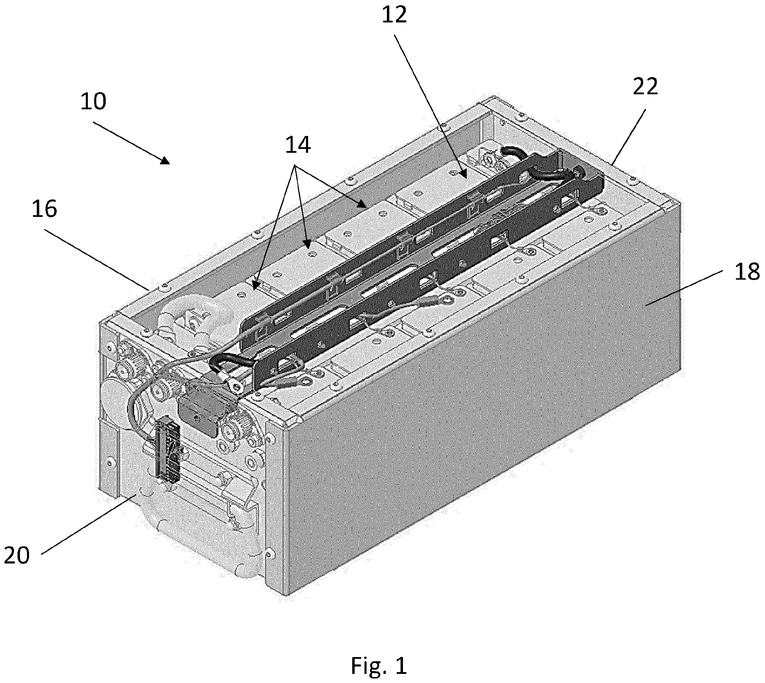

Figure 1 shows a schematic view of a power module 10 according to an embodiment of the invention. The power module 10 comprises a venting channel 12, a plurality of lithium ion battery cells 14 forming a cell stack, and a power module housing comprising a first side wall 16, second side wall 18, a first end wall 20, and a second end wall 22. The first end wall 20 comprises a vent towards which gas is directed via the venting channel 12. The gas may then pass from the venting channel 12, through the vent in the first end wall 20, to outside of the power module 10. As will be understood by a skilled person, more than one vent may be provided through which gas may pass from the venting channel 12 to the outside of the power module 10. Each of the side walls 16, 18, 20, and 22, are insulated with a non-conductive foam panel. The power module 10 also comprises a lid top panel and a bottom panel, though the top panel is shown as removed in figure 1 to show the internal arrangements of the power module 10, and the bottom panel is obscured in the view of figure 1. The venting channel 12 is mechanically fixed to the first end wall 20 and the second end wall 22 and clamps the plurality of battery cells 14 in position within the power module housing.

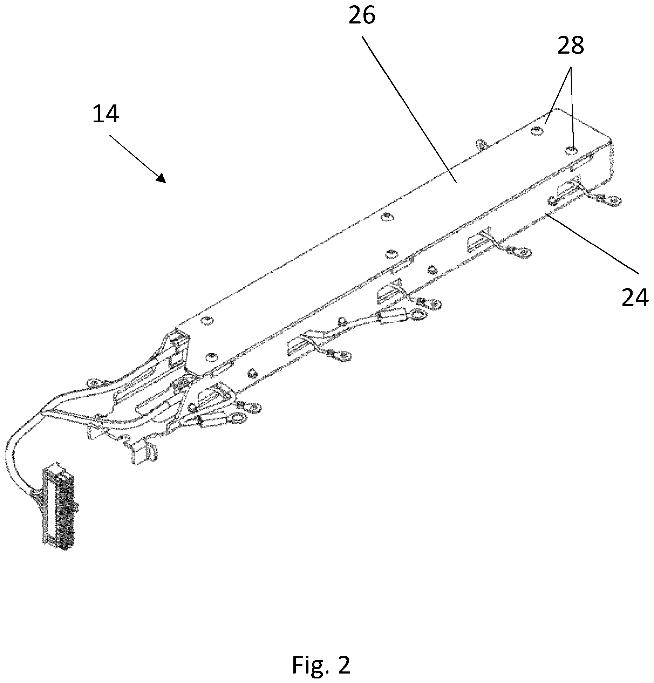

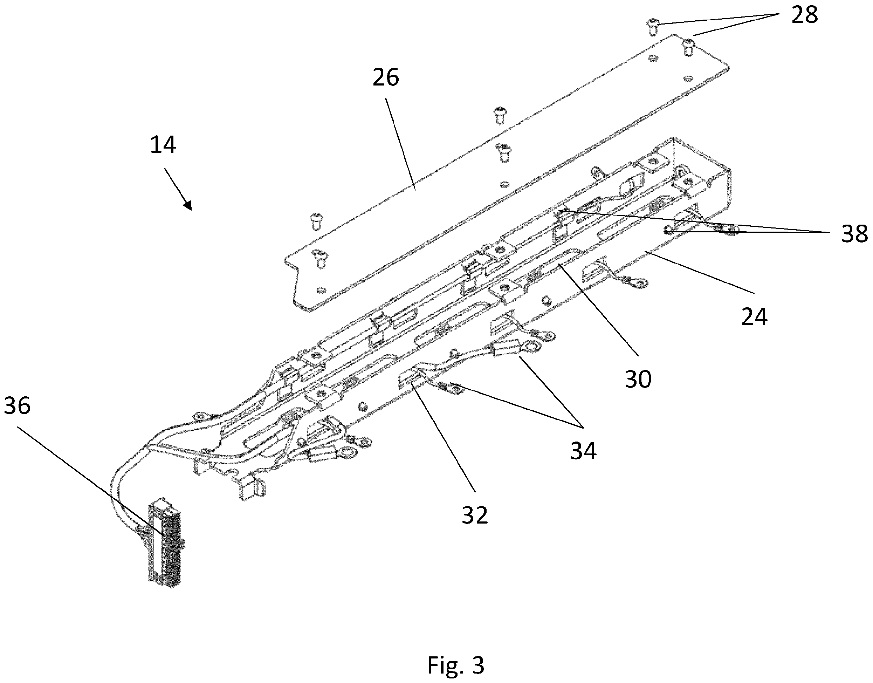

Figures 2 and 3 show the venting channel 14 in greater detail. A base channel 24 comprises a squared U-shaped profile with a bottom plate that runs along the top surface of the plurality of battery cells 14. Each of the plurality of battery cells 14 comprises a vent through which excess gas produced in the battery cells 14 is emitted, and the bottom plate of the base channel 24 comprises a plurality of venting apertures 30 which correspond to and align with the vents. Gas emitted from the battery cells 14 passes through the venting apertures 30, and is directed to move along the venting channel 12, and pass out of the battery module 10 through the vent in the first end wall 20. The venting channel 12 therefore acts to protect potentially sensitive components of the power module 10 from damage due to the vented gas, which may be expelled at high temperatures.

To improve the sealing between the venting apertures and the vents, a gasket or gaskets may be provided in between the bottom plate of the base channel 24 and the plurality of battery cells 14. A removable top portion 26 is fixed to the base channel 24 via a plurality of screws 28, and to improve sealing between the removable top portion 26 and the base channel 24, a gasket may be provided between the two components. In addition to the bottom plate of the base channel 24, the base channel 24 comprises side walls in which a plurality of wiring apertures 32 are provided. Battery wiring 34 passes through the wiring apertures 34, and is connected to the terminals of the plurality of battery cells 14 or sensors associated with the plurality of battery cells. The wiring runs through the venting channel 14 to a multi-pin connector 36, allowing easy connection to control and/or monitoring devices. Therefore, in addition to the control of potentially hot gases being expelled from the plurality of battery cells, the venting channel acts as a wiring guide within the power module 10. Gaskets may be provided associated with the wiring apertures 32 to improve the sealing between the wiring apertures and the wiring 34 which passes through the apertures. The base channel 24 includes a plurality of clips 38 which help secure and guide the wiring 34 through the venting channel 14. In this embodiment, the clips 38 are plastic components which are inserted into corresponding apertures in the side walls of the base channel 24. In alternative arrangements, the clips 38 may be formed as lips or grooves integrally formed with the base channel 24. The removable top panel 26 allows installation of the base channel 24 in the power module 10, with improved access for positioning of wiring etc., prior to the removable top panel 26 being secured to the base channel 24. In this embodiment, the base channel 24 and the removable top panel 26 are formed of steel sheet, with the base channel 24 being folded into shape, the steel sheet then coated in an insulating material, in this case silicone. In other embodiments, the skilled person will appreciate that other suitable materials may be used.

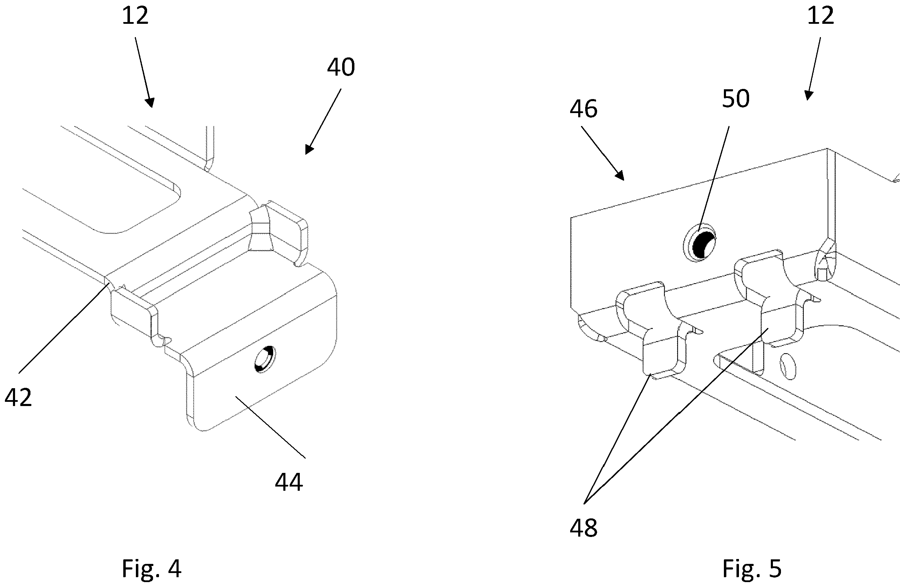

Figure 4 shows a first end 40 of a venting channel 12 according to the invention, and figure 5 shows a second end 46 of a venting channel according to the invention. The first end 40 comprises a first shoulder which is configured to abut the end edge of the cell stack made of the plurality of battery cells 14. The second end 46 comprises two lipped portions 48 which are configured to abut the opposite end edge of the cell stack made of the plurality of battery cells 14. The first shoulder 42 and the two lipped portions 48 act to hold the plurality of battery cells 14 in position relative to one another. Therefore, the venting channel acts to control gas flow within power module 10, provides a wire guide within the power module 10, and also forms a key structural component of the power module 10. Foam sheets may be sandwiched between the plurality of battery cells to insulate the plurality of battery cells 14 from one another, and also provide some level of shock absorption in the event of an impact on the power module 10. The foam sheets may be partially compressed by the installation of the venting channel 12 due to the spacing of the first shoulder 42 and the two lipped portions 48. The first end 40 comprises a second shoulder 44 which includes an aperture through which a fastener is inserted to secure the first end 40 to the first end wall 20 of the battery housing. The second end 46 includes an aperture 50 through which a fastener is inserted to secure the second end 46 to the second end wall 22 of the battery housing. The fasteners used are removable fasteners such as screws or bolts, which allows straightforward removal of the venting channel 12 should maintenance of the cell stack be required.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The venting channel 12 has been described as being connected to the power module housing by removable fasteners such as screws. In alternative embodiments, the venting channel may be secured by adhesive or welding.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A battery module comprising:
a battery module housing;
a plurality of battery cells within the battery module housing forming a cell stack, each of the plurality of battery cells comprising a cell vent configured to expel excess gas emitted from the battery cell; and
a venting channel, the venting channel comprising a plurality of venting apertures located aligned with the plurality of cell vents, the venting channel arranged to direct gas emitted from the cell vents towards a vent in the battery module housing;
the venting channel further arranged to secure the cell stack in position within the battery housing;
the venting channel further comprising a plurality of wiring apertures, and battery module wiring passing through the wiring apertures and running along the venting channel.

2. A battery module as claimed in claim 1, wherein the venting channel comprises one or more tabs arranged to secure the venting channel to the battery module housing, such that the cell stack is held in position within the battery housing.

3. A battery module as claimed in claim 2, wherein the one or more tabs are mechanically attached to the battery module housing.

4. A battery module as claimed in any preceding claim, wherein the venting channel is approximately cuboidal in shape.

5. A battery module as claimed in any preceding claim, wherein the venting channel comprises a removable top section, the removable top section spaced opposite the venting apertures.

6. A battery module as claimed in any preceding claim, wherein the venting channel is at least partially made of a metal material,

7. A battery module as claimed in any preceding claim, wherein the venting channel comprises an insulating material.

8. A battery module as claimed in any preceding claim, wherein the venting channel comprises a metal material coated in an insulating material.

9. A battery module as claimed in any preceding claim, wherein the venting channel comprises one or more clips or guides arranged to secure and/or guide wiring which runs along the venting channel.

10. A battery module as claimed in claim 9, wherein the clips or guides are integrally formed with the venting channel.

11. A battery module as claimed in any preceding claim, wherein the clips or guides are additional components secured to the venting channel.

12. A battery module as claimed in any preceding claim, wherein one or both of the vent apertures and wiring apertures are provided with gaskets to improve sealing.

13. A battery module as claimed in claim 5, wherein a gasket is provided to improve sealing between the removable top portion and remainder of the venting channel.

14. A venting channel for a battery module, the battery module comprising a plurality of battery cells forming a cell stack, the venting channel comprising:
a plurality of venting apertures configured for alignment with a plurality of cell vents, the venting channel arranged to direct gas emitted from the cell vents towards a vent in the battery module housing;
the venting channel further configured to secure the cell stack in position within the battery housing;
the venting channel further comprising a plurality of wiring apertures, configured to allow battery module wiring to pass through the wiring apertures and run along the venting channel.

15. A method of manufacturing a battery module according to claim 1, the method comprising the steps of:
aligning the venting channel such that the venting apertures are aligned with the cells vents;
securing the venting channel to the power module housing such that the cell stack is secured within the power module housing;
passing wiring through the wiring apertures such that the wiring runs along the venting channel.
